# EUROPEAN PATENT SPECIFICATION

(11) **EP 1 552 870 B1**
(45) Date of publication and mention of the grant of the patent: **15.08.2012**
(21) Application number: 03761841.0
(22) Date of filing: 30.06.2003
(51) Int. Cl.: B01D 3/16, B01D 3/22

(54) **INTERNAL HEAT EXCHANGE-TYPE DISTILLATION COLUMN**
DESTILLATIONSKOLONNE MIT INNEREM WÄRMETAUSCH
COLONNE DE DISTILLATION DU TYPE A ECHANGE DE CHALEUR INTERNE

(30) Priority: 28.06.2002 JP 2002189631
(43) Date of publication of application: 13.07.2005
(73) Proprietor: KANSAI CHEMICAL ENGINEERING CO. LTD, Amagasaki-shi Hyogo 660-0053 (JP)
(72) Inventor: NODA, Hideo Kansai Chemical Engineering CO., Ltd., Amagasaki-shi,Hyo go 660-0053 (JP); YAMAJI, Hiroshi Kansai Chemical Engineering CO.Ltd, Amagasaki-shi, Hyogo 660-0053 (JP); KURATANI, Nobuyuki Kansai Chem.EngineeringCo.Ltd., Amagasaki-shi, Hyogo 660-0053 (JP)
(74) Representative: Koepe, Gerd L.
(86) International application number: PCT/JP2003/008322
(87) International publication number: WO 2004/002602

(56) References cited:
- DE-A1- 4 118 468
- GB-A- 921 443
- JP-A- 8 131 704
- JP-A- 2001 137 603
- JP-A- 2002 159 802
- JP-U- 51 015 142
- US-B1- 6 237 366

## Description

### Technical Field

The present invention relates to an internal heat exchange-type distillation column having a stripping section and a rectifying section.

### Background Art

Distillation processes are performed in many fields including the petrochemical industry.

The document US-b 6,237,366 relates to an integrated heat exchange core for a cryogenic air separation system, said core receiving and cooling an incoming feed air stream, while a rectification section facilitates mass transfer of the fed air stream and a separation section is in a heat exchange relationship with the rectification section.

The document JP-A 8-131,704 concerns an internal heat exchange type distillation column wherein the heat transfer area in accordance with the physical properties of a substance to be processed and the accuracy of separation by distillation can be ensured.

The document JP-A 2002-159,802 discloses a joining-type distillation tower wherein to sections are generated in the inner volume of the distillation tower by means of a partition plate.

The document US-A 4,234,391 relates to a continuous distillation apparatus and method, the apparatus including separate stripping and rectifying sections in tandem, each of which are segregated into a plurality of vapor/liquid contact stages. The rectifying section is operated at a higher temperature than the stripping section by compressing vapor from the stripping section prior to introducing the vapor into the rectifying section. Thermal energy is conserved during the distillation process by transferring thermal energy from the rectifying section to the stripping section with a plurality of heat pipes.

Multi-stage distillation columns are used in order to perform distillation more precisely. However, there is the problem that energy loss is large.

Therefore, internal heat exchange-type distillation columns have been proposed in order to utilize energy more efficiently. An example of the internal heat exchange-type distillation column is disclosed in Japanese Patent No.2694427. This distillation column has a structure in which a single tube is inserted in the internal portion of a cylindrical main body, which is a concentric double structure having a rectifying section inside the single tube and a stripping section outside thereof. The single tube is divided into a plurality of blocks, and the plurality of blocks are stacked in the horizontal direction, and thus a multi-staged structure is formed. The stripping section of one block is coupled to the stripping section of an adjacent block via a communication tube, and heat in the rectifying section is transmitted to the stripping section via the tube wall of the single tube and the tube wall of the communication tube. However, the efficiency of heat transfer has still to be improved.

Furthermore, the internal heat exchange-type distillation column is regarded as a pressure vessel and needs to be subjected to periodical inspections, because the rectifying section is on the side of high pressure. However, in the distillation column, the rectifying section is enclosed by the stripping section, so that periodical inspections are difficult to perform and maintenance cannot easily be performed.

On the other hand, a mixture to be distillated (e.g., a solvent including a plurality of components such as a reaction mixture) is distillated after solid materials are removed. However, solid materials may be produced during distillation. In order to remove the solid materials produced in the distillation processes (solid products), trays are often provided in the stripping section and the rectifying section of the internal heat exchange-type distillation column. When the trays are clogged with solid products, the distillation efficiency is reduced, resulting in operation failure in many cases. However, it takes much time and efforts to remove the trays and clean them.

Therefore, there is a demand for an internal heat exchange-type distillation column that has excellent efficiency of heat transfer and whose trays can be cleaned easily and for which maintenance involving periodical inspections can be easily performed.

The present invention solves the above-described conventional problems, and it is an object of the present invention to provide an internal heat exchange-type distillation column that has a good utilization ratio of energy (efficiency of heat transfer) and that facilitates replacement and cleaning of trays that are clogged with solid products produced during distillation and facilitates maintenance.

### Disclosure of Invention

The present invention provides an internal heat exchange-type distillation column comprising a stripping section and a rectifying section that are integrated into one piece, wherein the configuration of the internal heat exchange-type distillation column comprises: a heat transfer means provided on a face of the rectifying section that is in contact with the stripping section and accommodated in the stripping section and being projecting from the face of the rectifying section that is in contact with the stripping section into the inside of the stripping section; and the stripping section being provided with a tray or a plurality of trays; the heat transfer means being capable of being supplied with steam directly from the rectifying section, thereby allowing a heat transmission from the heat transfer means to the stripping section, while said vapour is condensed to a liquid, and said liquid that has been condensed as a result of heat transfer is returned to the rectifying section; wherein a channel forming member for forming a channel of steam is provided in the heat transfer means in the form of a heat transfer tube or plate, said channel forming member being a plate disposed in the internal portion of the heat transfer tube with one end of the plate being positioned away from the end of the heat transfer tube and the other end of the plate projecting into the rectifying section, or said channel forming member being projected portions provided in the inlet and the outlet of the steam of the heat transfer tube, thus serving as a steam introduction portion at the inlet and as a suction portion at the outlet; or said channel forming member being a gutter having a semicircular section or a plate having a rectangular section or a gutter having a triangular section or a gutter having a rectangular section or a gutter having a section of a pentagon or of a polygon with more angles or a cylinder; and at least one open/lose section in the internal heat exchange-type distillation column allowing that each contents in the stripping section and the rectifying section can be replaced or cleaned through the open/close section, which open/close section is a manhole.

In accordance with the invention a channel forming member for forming a channel of steam is provided in the heat transfer means.

In another preferred embodiment, the heat transfer means is a heat transfer tube or plate, and the heat transfer tube or plate is provided with a slope.

In a more preferred embodiment, the heat transfer means is a heat transfer tube having a rectangular section, and one vertex of the section is provided in a lower position than other vertices of the section.

In another preferred embodiment, the stripping section and the rectifying section are separably integrated into one piece via a flange, and the stripping section and the rectifying section are separated so that a content of the stripping section and the rectifying section can be replaced or cleaned by separating the stripping section from the rectifying section.

In a more preferred embodiment, the heat transfer means is provided removably.

In another preferred embodiment, the open/close section is a manhole.

In yet another preferred embodiment, a tray with a downcomer is provided in the stripping section.

In a further preferred embodiment, the stripping section is configured by a balmetic condenser system.

In anther preferred embodiment, a tray without a downcomer is provided in the stripping section.

In a more preferred embodiment, the stripping section has a semi-cylindrical or prismatic shape.

Yet another preferred embodiment, cross-section areas of the stripping section and the rectifying section are varied in the distillation column.

In a further preferred embodiment the heat transfer means is constituted by a plurality of heat transfer tubes, and a condensed liquid is accumulated on the heat transfer tubes and drops from a space between the heat transfer tubes while effecting vapor-liquid contact.

### Brief Description of Drawings

FIG. 1 is a schematic view of an internal heat exchange-type distillation column of the present invention.
FIG. 2 is a schematic view of an internal heat exchange-type distillation column provided with a heat transfer tube having a rectangular cross-section provided with a channel forming member.
FIG. 3 is a schematic view of an internal heat exchange-type distillation column provided with a heat transfer means in which various shapes are combined.
FIG. 4 is a schematic view of an internal heat exchange-type distillation column having heat transfer means having the shape of FIG. 3.
FIG. 5 is a view showing an example of an embodiment in which a channel forming member is used.
FIG. 6 is a schematic view showing a cross-section of a heat transfer provided with a slope and a view showing an example of the arrangement of the heat transfer tube.
FIG. 7 is a schematic view of an internal heat exchange-type distillation column employing a tray provided with a downcomer.
FIG. 8 is a schematic view of an internal heat exchange-type distillation column provided with a balmetic condenser system.
FIG. 9 is a view of the appearance of an internal heat exchange-type distillation column employing trays without a downcomer.
FIG. 10 is a view of the appearance of an internal heat exchange-type distillation column that does not employ a tray.
FIG. 11 is a schematic view of a distillation column in which the cross-section areas of the stripping section and the rectifying section are varied.
FIG. 12 is a view illustrating a method for separating toluene from benzene using the internal heat exchange-type distillation column of the present invention.

### Best Mode for Carrying Out the Invention

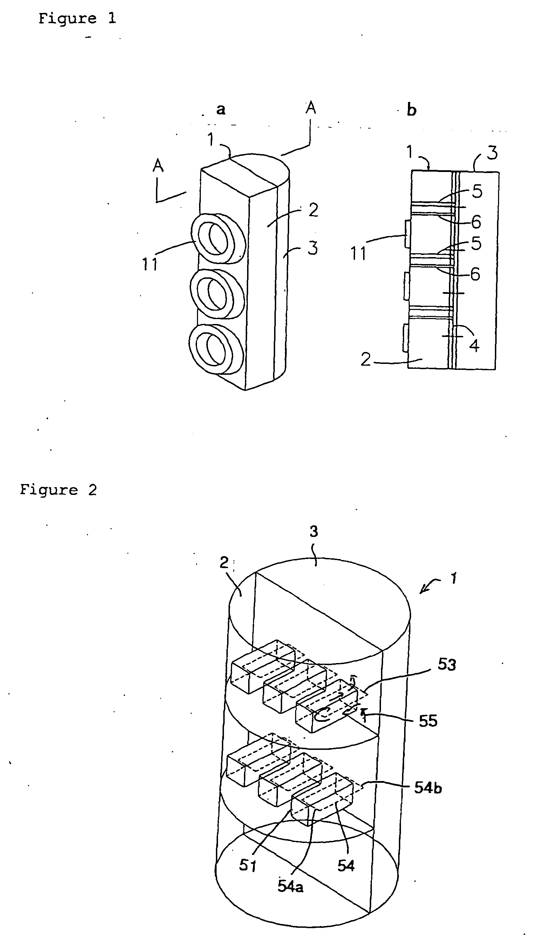

An example of the internal heat exchange-type distillation column of the present invention will be described with reference to FIG. 1. FIG. 1a shows an internal heat exchange-type distillation column in which a stripping section 2 and a rectifying section 3 are integrated into one piece (hereinafter, referred to simply as "distillation column"). The integration may be performed by welding or coupling with a flange. FIG. 1b is a cross-sectional view taken along a line A-A of FIG. 1a, and the stripping section 2 is opposed to and integrated with the rectifying section 3 by welding. A heat transfer means 5 (e.g., heat transfer tube) is provided on the face 4 of the rectifying section that is in contact with the exhausting section 2, and is configured so as to be accommodated in the stripping section 2 when they are integrated. The distillation column is configured such that the heat transfer means 5 is directly supplied with steam from the rectifying section 3, and heat is transmitted from the heat transfer means 5 to the stripping section 2, and liquid that is condensed as a result of heat transfer is returned to the rectifying section 3. Furthermore, trays 6 are provided in the stripping section 2, if necessary.

The distillation column 1 is provided with at least one open/close section 11, and the trays accommodated in the stripping section 2 and the rectifying section 3 can be replaced or cleaned through the open/close section 11.

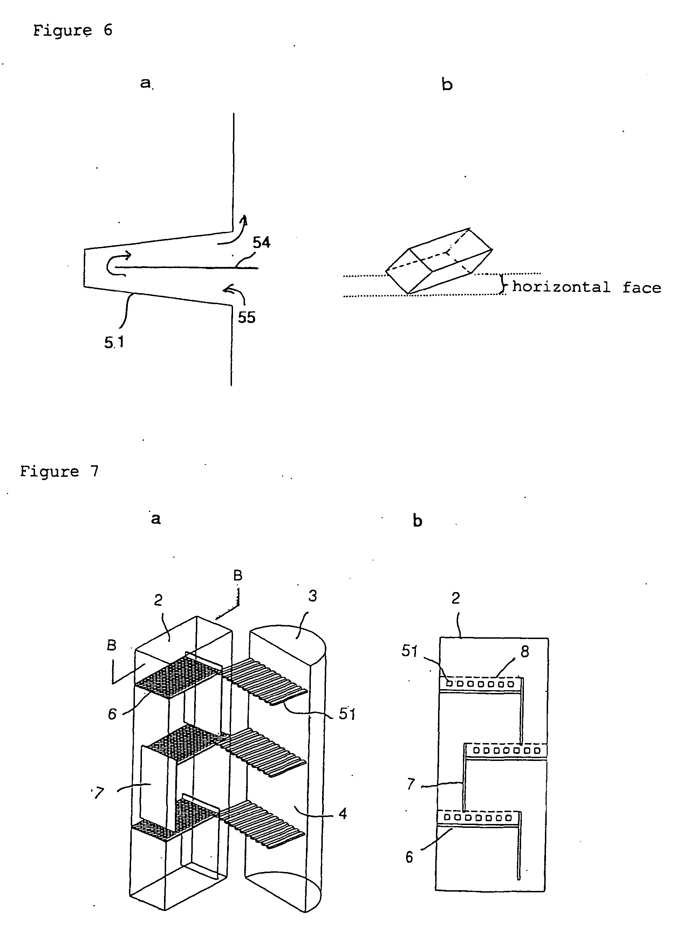

Furthermore, in the distillation column of the present invention, the stripping section 2 and the rectifying section 3 may be integrated in such a manner that they can be separated. For example, FIG. 7 is an example of a distillation column in which the stripping section 2 and the rectifying section 3 are coupled by a flange. As shown in FIG. 7a, the stripping section 2 is separated from the rectifying section 3 by removing the flange. In other words, the open/close section 11 encompasses the portion in which the stripping section 2 and the rectifying section 3 are coupled with the flange. Thus, in FIG. 7, the content of the stripping section 2 can be replaced or cleaned by opening the stripping section 2. When the distillation column 1, in which the stripping section 2 and the rectifying section 3 are integrated via the flange in such a manner that they can be separated, is large, it may be difficult to separate the stripping section 2 from the rectifying section 3. Therefore, the distillation column 1 can be configured so as to be separated into several portions and such that these portions can be separated, if necessary. Alternatively, the open/close section 11 having a shape as shown in FIG. 1a may be provided in the outer portion of the separable distillation column.

The content (e.g., packed bed, tray, and heat transfer means such as heat transfer tubes or hollow plates) of the rectifying section 3 can be easily attached or removed, or cleaned by ensuring that the face 4 of the rectifying section 3 that is in contact with the stripping section 2 can be opened.

There is no limitation regarding the shape of the open/close section 11, as long as the content of the stripping section 2 or the rectifying section 3 can be attached or removed, or cleaned, and the open/close section can be manhole-shaped.

There is no limitation regarding the configuration of the heat transfer means 5 used in the present invention, and any configuration can be used, as long as steam from the rectifying section 3 is supplied directly to the heat transfer means 5, and heat is transmitted from the heat transfer means 5 to the stripping section 2, and as a result of the heat transfer, the condensed liquid is returned to the rectifying section 3. It is preferable that the heat transfer means 5 projects into the inside of the stripping section 2 so that an even larger heat transfer can be achieved, in addition to the conventional heat transfer from the wall face of the rectifying section 3, and thus heat efficiency can be improved significantly.

It is preferable that the heat transfer means 5 is provided removably on the face 4 of the rectifying section 3 that is in contact with the stripping section 2. This makes it possible to make replacement to various shapes of the heat transfer means 5 in view of the efficiency of heat transfer (heat transfer area), and to facilitate the maintenance of the heat transfer means 5.

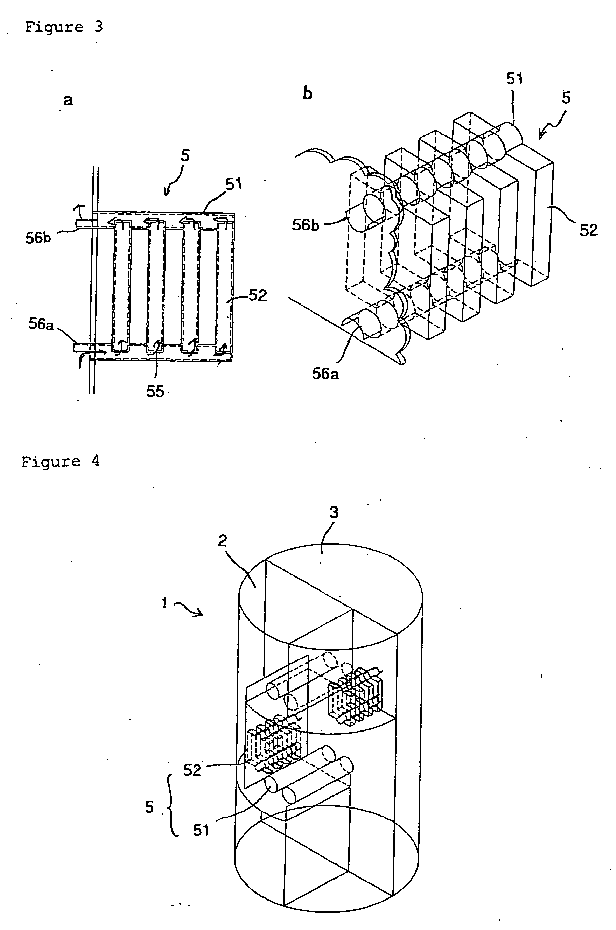

Heat transfer tubes or plates can be used preferably as the heat transfer means 5. There is no limitation regarding the shape of the transfer tube or plate, and its cross-section can be a circle, an ellipse, a rectangle, or the like. For example, a heat transfer tube 51 shown in FIG. 2 has a rectangular cross-section. Furthermore, heat transfer means in which various shapes are combined can be used. For example, the heat transfer means 5 shown in FIG. 3 is constituted by a plurality of hollow plates 52 that are in communication with two heat transfer tubes 51 having a cylindrical cross-section. The heat transfer means 5 is formed by combining these heat transfer tubes 21 or hollow plates 52, and a distillation column of a downcomer system, as shown in FIG. 4, can be constituted.

It is preferable that the heat transfer means 5 is provided with a channel forming member 53 for forming a channel of steam in the internal portion of the heat transfer means 5. The case where the heat transfer tube 51 is used as the heat transfer means 5 will be described below.

FIG. 2 is a schematic view of a distillation column comprising a heat transfer tube having a rectangular cross-section that is provided with a channel forming member. The heat transfer tube 51 in FIG. 2 is provided with a channel forming member 53 for forming a channel of steam inside the heat transfer tube 51. The channel forming member 53 is a plate 54, and is disposed such that in the internal portion of the heat transfer tube 51, one end 54a of the plate 54 is positioned away from the end of the heat transfer tube 51, and the other end 54b is positioned inside the rectifying section 3. In other words, the plate is disposed such that one end 54b of the plate 54 projects into the rectifying section 3. With this configuration, steam 55 that flows upward from the lower portion of the rectifying section 3 is interrupted by the plate 54 and flows into the heat transfer tube 51, through the end 54a of the heat transfer tube 51 and returns to the rectifying section 3. That is to say, a steam channel can be formed inside the heat transfer tube 51. The steam condensed in this channel becomes a condensed liquid and is recovered.

The channel forming member 53 such as the plate 54 that partitions a portion of the internal portion of the heat transfer tube 51 is particularly effective, when distilling a mixture of steams having different boiling points. For example, when distilling a mixed steam of benzene and toluene, toluene is readily condensed, therefore, if there is no channel forming member 53, condensed toluene-rich liquid tends to be formed in the vicinity of the inlet of the heat transfer tube 51, and benzene-rich steam tends to stay in the internal portion of the heat transfer tube 51. Therefore, if the temperature of the steam is substantially the same as that of the stripping section, the flow of the steam in the transfer tube stops. By providing a channel forming member 53 to the heat transfer tube, a flow of the steam is created in the heat transfer tube, which results in avoiding a stagnation of benzene.

Another embodiment of the channel forming member 53 can be projected portions 56a and 56b provided in the inlet and the outlet of the steam of the heat transfer tube 51, respectively, as shown in FIG. 3, for example. The projected portion 56a on the side of the inlet serves as a steam introduction portion, and the projected portion 56b on the side of the outlet serves as a suction member. There is no limitation regarding the shape of the channel forming member 53, and for example, the plate 54 shown in FIG. 2, a gutter having a semicircular section shown by 56a or 56b in FIG. 3, a plate having a rectangular section, a gutter having a triangular section, a gutter having a rectangular section, a gutter having a section of a pentagon or a polygon with more angles, a cylinder, or other shapes that can reliably guide the steam to the heat transfer tube 51 can be used preferably. The present invention is not limited to the case where a single member constitutes the channel forming member 53, but includes the case where a plurality of shapes are used, so that the channel forming member is configured so as to guide the steam to the heat transfer tube 51 reliably.

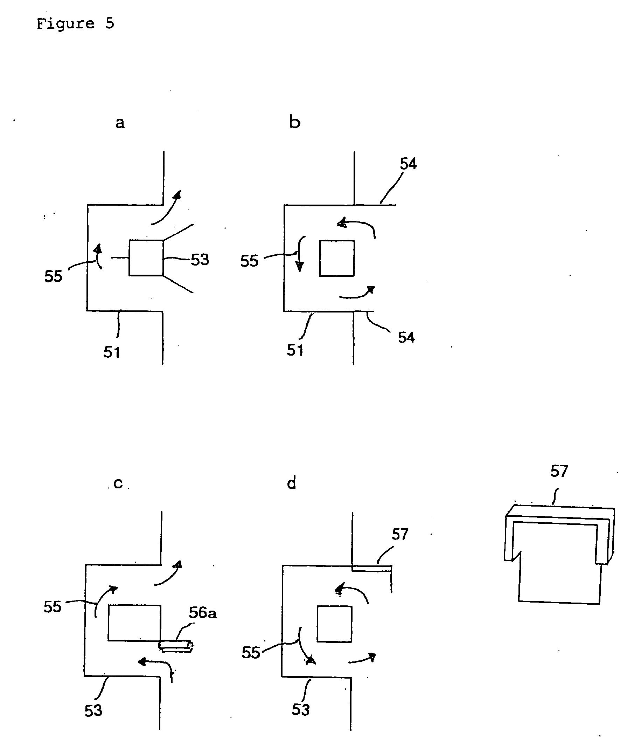

FIG. 5 shows an example of the manner in which the channel forming member 53 is used. A channel of steam can be formed as desired by variously changing the arrangement of the channel forming member 53. For example, FIG. 5a is a schematic view showing the case where a flow of steam is formed in the heat transfer tube 51 by disposing the integrally constituted channel forming member 53. FIG. 5b is a schematic view showing the case where the channel forming member 53 is constituted by two plates 54 having different lengths. These plate 54 are provided in different positions, that is the longer plate 54 is provided in the upper portion of the flow of the steam. By this constitution, the steam is forced to flow into the heat transfer tube 51 from the upper portion of the heat transfer tube 51, thereby a flow of the steam is formed. Furthermore, FIG. 5c is a schematic view showing the case where a gutter having a semicircular section facing downward, as shown by 56a in FIG. 3, is disposed in a channel of steam, so that a flow of steam is formed in the heat transfer tube 51. FIG. 5d is a schematic view showing the case where the channel forming member 53 having a shape shown by 57, in which the gutter with a rectangular section is combined with a plate, is provided in the upper portion of the flow of steam. In this case, the steam is forced to flow into the heat transfer tube 51 from the upper portion of the heat transfer tube 51, so that a flow of the steam is formed in the heat transfer tube 51.

Furthermore, it is preferable that the heat transfer tube 51 is provided with a slope, as shown in FIG. 6a, in view of the flow of the steam, recovery of a condensed liquid and the like. When a heat transfer tube having a rectangular section is used, as shown in FIG. 6b, one of vertices of the rectangular section may be provided so as to be in a lower position than other vertices. For example, one side of the heat transfer tube in FIG. 2 is not provided so as to be horizontal, but is provided in the manner shown in FIG. 6b, so that the condensed liquid gathers at the vertex that is in the lowest position of the rectangular section, and thus a channel of the condensed liquid can be formed. The heat transfer tube may be provided so as to satisfy FIGS. 6a and 6b at the same time.

The inside of the rectifying section 3 may be filled with a packed bed that is used commonly by those skilled in the art. Alternatively, a tray may be provided so as to achieve a tray structure. Alternatively, they can be combined. The tray may be entirely porous, partially porous (e.g., in a sieve portion), or entirely non-porous. A lift tray, a valve tray, a sieve tray, a cap tray or the like can be used as the tray.

A tray may be provided, if necessary, for the purpose of improving the efficiency of heat transfer of the stripping section 2, and removing a solid material produced during distillation. The above-listed trays can be used as the tray, and can be selected as appropriate, depending on the purpose.

FIG. 7 is a view showing another embodiment of the present invention and is a schematic view showing a distillation column in which a tray provided with a downcomer is provided in the stripping section 2. FIG. 7a shows the configuration of the stripping section 2 and the rectifying section 3 when they are separated. FIG. 7b is a cross-sectional view taken along a line B-B when the stripping section 2 and the rectifying section 3 are integrated into one piece. As shown in FIG. 7a, a plurality of trays 6 are provided substantially horizontally in the stripping section 2, and the trays 6 are connected to each other through the downcomer 7. The condensed liquid 8 that is stored in the tray 6 overflows and flows along the downcomer 7 to move to the lower tray 6. The heat transfer tube 51 is provided in the rectifying section 3, and the heat transfer tube 51 is provided so as to be immersed in the condensed liquid 8 stored in the tray 6, as shown in FIG. 7b. With such a configuration, heat in the rectifying section 3 is utilized in the stripping section 2 efficiently, so that the efficiency of heat transfer is improved, and heated condensed liquid 8 overflows from the tray 6 and flows into the lower tray 6 sequentially, so that the heat in the rectifying section 3 can be utilized more efficiently.

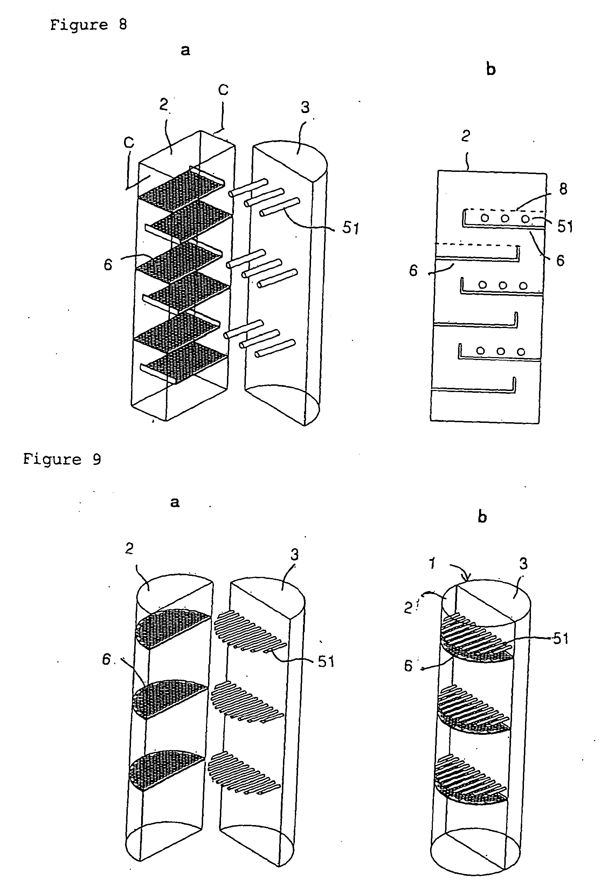

FIG. 8 is a view showing still another embodiment, and is a view of the case where the stripping section 2 is constituted by a balmetic condenser system. FIG. 8a shows the configuration of the stripping section 2 and the rectifying section 3 when they are separated. FIG. 8b is a cross-sectional view taken along a line C-C when the stripping section 2 and the rectifying section 3 are integrated into one piece. As shown in FIG. 8, the heat transfer tube 51 is provided so as to be immersed in the condensed liquid 8 stored in every second tray 6. The downcomer 7 is not provided in the tray 6, and the condensed liquid 8 overflows from the tray 6 and drops to the lower tray 6 in a waterfall manner. Steam flows while threading through the dropping condensed liquid 8. In this configuration, a packed bed can be provided in a portion in which the condensed liquid 8 drops and flows to remove a solid material.

FIG. 9 is a view showing a distillation column 1 in which trays 6 without a downcomer are arranged in the stripping section 2. FIG. 9a shows the configuration of the stripping section 2 and the rectifying section 3 when they are separated. FIG. 9b is a perspective view when the stripping section 2 and the rectifying section 3 are integrated into one piece. In this configuration, it is preferable that the tray 6 is perforated, and the condensed liquid 8 is in contact with steam while dropping from the tray 6.

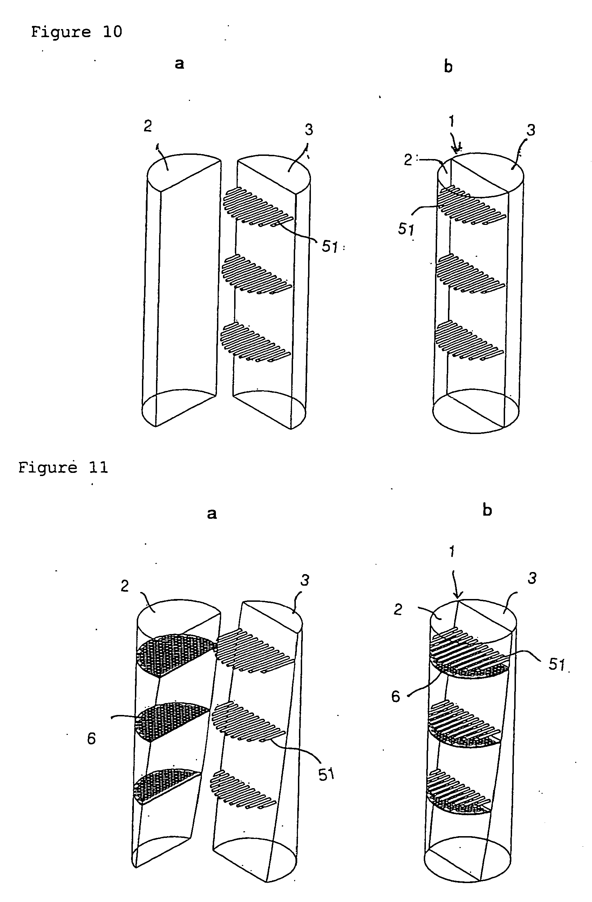

FIG. 10 is a schematic view showing a distillation column 1 in which the stripping section 2 is not provided with the tray 6 and only a plurality of heat transfer tubes 51 are provided. FIG. 10a shows the configuration of the stripping section 2 and the rectifying section 3 when they are separated. FIG. 10b is a perspective view when the stripping section 2 and the rectifying section 3 are integrated into one piece. In this configuration, the condensed liquid 8 stays on the heat transfer tube 51, and drops from the space between the heat transfer tubes 51 while effecting vapor-liquid contact.

Alternatively, the distillation column may be configured such that the cross-section areas of the stripping section 2 and the rectifying section 3 are varied in the distillation column. FIG. 11 is a schematic view of such an embodiment. FIG. 11a shows the configuration of the stripping section 2 and the rectifying section 3 when they are separated. FIG. 11b is a perspective view when the stripping section 2 and the rectifying section 3 are integrated into one piece. In this configuration, the cross-section area in the stripping section 2 is larger in the upper portion of the distillation column and becomes smaller toward the bottom of the distillation column. Conversely, the cross-section area in the rectifying section 3 is smaller in the upper portion of the distillation column and becomes larger toward the bottom of the distillation column.

There is no limitation regarding the shape of the distillation column of the present invention, and various combinations such as a combination of a prismatic stripping section 2 and a semi-cylindrical rectifying section 3, as shown in FIG. 1, a combination of a stripping section 2 and a rectifying section 3 that are both semi-cylindrical, as shown in FIG. 9, and a combination of a stripping section 2 and a rectifying section 3 that are both prismatic are possible.

The heat in the rectifying section is transmitted to the stripping section efficiently by integrating the stripping section and the rectifying section into one piece, providing the heat transfer means on the face of the rectifying section that is in contact with the stripping section, providing the heat transfer means so as to be accommodated in the stripping section, and supplying steam from the rectifying section to the heat transfer means. Therefore, heat efficiency can be improved significantly. Furthermore, the content (e.g., packed bed, tray, heat transfer tube, or hollow plate) in the stripping section or the rectifying section can be cleaned in situ or cleaned after being removed. Therefore, the maintenance of the distillation column can be facilitated.

### (Example)

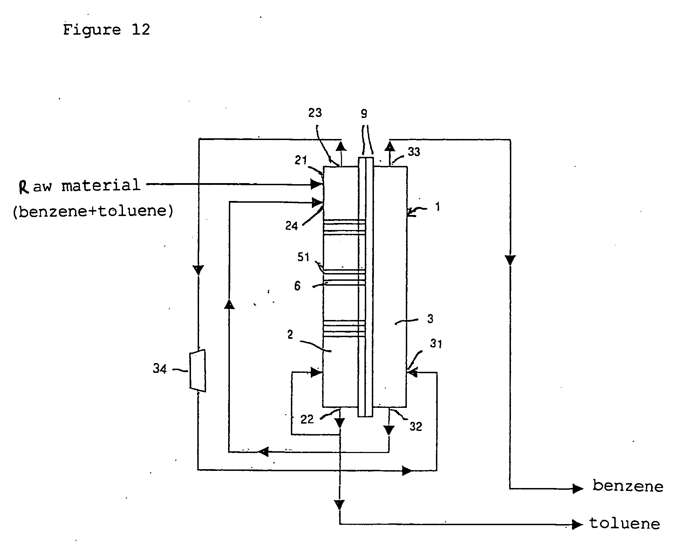

A method for distilling a mixture of benzene and toluene to separate each other using the internal heat exchange-type distillation column 1 of the present invention will be described with reference to FIG. 12. In the distillation column 1 in FIG. 12, the rectifying section 3 and the stripping section 2 are integrated into one piece through a flange 9, and the heat transfer tube 51 is provided above the tray 6 provided in the stripping section 2, projecting from the rectifying section 3. The rectifying section 3 is filled with a packed bed. First, a mixture of benzene and toluene is supplied from a raw material inlet 21 to the stripping section 2. The stripping section 2 is set to a predetermined high temperature and high pressure, and the upper portion of the stripping section 2 is set to a temperature in the vicinity of the boiling point of benzene at the predetermined pressure, for example. The lower portion of the stripping section 2 is set to a temperature in the vicinity of the boiling point of toluene at the predetermined pressure. Thus, toluene can be accumulated in the bottom of the stripping section 2 and be discharged from an outlet 22. Benzene-rich steam is discharged from a steam inlet 23 and is pressurized in a compressor 34, and then enters the rectifying section 3 from a distillate inlet 31 of the rectifying section 3. The rectifying section 3 is set to a higher temperature and higher pressure than those of the stripping section 2, and the upper portion of the rectifying section 3 is set to a temperature in the vicinity of the boiling point of benzene at the predetermined pressure, for example. The lower portion is set to a temperature in the vicinity of the boiling point of toluene at the predetermined pressure. Thus, steam of benzene is discharged from a steam outlet 33. The mixture of benzene and toluene is discharged from a residue outlet 32 in the lower portion of the rectifying section 3, and is fed back to the stripping section 2 via a residue inlet 24 of the stripping section 2. Thus, benzene and toluene can be separated by distillation.

### Industrial Applicability

As described above, the internal heat exchange-type distillation column of the present invention can transmit heat from the rectifying section to the stripping section efficiently, so that the heat efficiency can be improved efficiently. Furthermore, an open/close portion is provided in the stripping section of the distillation column, or the rectifying section and the stripping section are configured so as to be separable from each other, so that the tray in the stripping section can be cleaned in situ or cleaned after being removed. Furthermore, in the inspection of the rectifying section as a pressure vessel, since the rectifying section is not enclosed by the stripping section unlike the conventional example, inspection can be easily performed. Therefore, the maintenance of the distillation column can be easily performed.

## Claims

1. An internal heat exchange-type distillation column (1) comprising a stripping section (2) and a rectifying section (3) that are integrated into one piece, wherein the configuration of the internal heat exchange-type distillation column (1) comprises:
- a heat transfer means (5) provided on a face (4) of the rectifying section (3) that is in contact with the stripping section (2) and accommodated in the stripping section (2) and being projecting from the face (4) of the rectifying section (3) that is in contact with the stripping section (2) into the inside of the stripping section (2) and
- the stripping section (2) being provided with a tray (6) or a plurality of trays (6);
- the heat transfer means (5) being capable of being supplied with steam directly from the rectifying section (3), thereby allowing a heat transmission from the heat transfer means (5) to the stripping section (2), while said vapour is condensed to a liquid, and said liquid that has been condensed as a result of heat transfer is returned to the rectifying section (3);
- wherein a channel forming member (53) for forming a channel of steam is provided in the heat transfer means (5) in the form of a heat transfer tube (51) or plate (52),
-- said channel forming member (53) being a plate (54) disposed in the internal portion of the heat transfer tube (51) with one end (54a) of the plate (54) being positioned away from the end of the heat transfer tube (51) and the other end (54b) of the plate (54) projecting into the rectifying section (3), or
-- said channel forming member (53) being projected portions (56a, 56b) provided in the inlet and the outlet of the steam of the heat transfer tube, thus serving as a steam introduction portion at the inlet and as a suction portion at the outlet; or
-- said channel forming member (53) being a gutter having a semicircular section (56a, 56b) or a plate having a rectangular section or a gutter having a triangular section or a gutter having a rectangular section or a gutter having a section of a pentagon or of a polygon with more angles or a cylinder; and
- at least one open/close section (11) in the internal heat exchange-type distillation column (1) allowing that each contents in the stripping section (2) and the rectifying section (3) can be replaced or cleaned through the open/close section (11), which open/close section (11) is a manhole.

2. The distillation column (1) of claim 1, wherein the heat transfer means (5) is a heat transfer tube (51) or plate (52), and the heat transfer tube (51) or plate (52) is provided with a slope.

3. The distillation column (1) of claim 1 or 2, wherein the heat transfer means (5) is a heat transfer tube (51) having a rectangular section, and one vertex of the section is provided in a lower position than other vertices of the section.

4. The distillation column (1) of any of claims 1 to 3, wherein the channel forming member (53) is constituted by two plates (54) having different lengths, the longer plate being provided in the upper portion of the flow of the steam; or wherein a gutter having a semicircular section facing downward is disposed in a channel of steam; or wherein a channel forming member (53) in which a gutter having a rectangular section is combined with a plate is provided in the upper portion of the flow of steam.

5. The distillation column (1) of any one of claims 1 to 4, wherein the stripping section (2) and the rectifying section (3) are separably integrated into one piece via a flange (9), and the stripping section (2) and the rectifying section (3) are separated so that a content of the stripping section (2) and of the rectifying section (3) can be replaced or cleaned by separating the stripping section (2) from the rectifying section (3).

6. The distillation column (1) of any one of claims 1 to 5, wherein the heat transfer means (5) is provided removably.

7. The distillation column (1) of any one of claims 1 to 6, wherein the tray(s) (6) provided in the stripping section (2) is provided with a downcomer (7) / are provided with downcomers (7).

8. The distillation column (1) of any one of claims 1 to 6, wherein the tray(s) (6) provided in the stripping section (2) is a tray (6) without a downcomer (7) / are trays (6) without downcomers (7).

9. The distillation column (1) of any one of claims 1 to 8, wherein the stripping section (2) has a semi-cylindrical or prismatic shape.

10. The distillation column (1) of any one of claims 1 to 8, wherein cross-section areas of the stripping section (2) and of the rectifying section (3) are varied in the distillation column (1).

11. The distillation column (1) of any one of claims 1 to 6, wherein the heat transfer means (5) is constituted by a plurality of heat transfer tubes (51) capable of allowing condensing liquid to accumulate thereon and to drop from a space between the heat transfer tubes (51) while effecting vapour-liquid contact.

## Patentansprüche

1. Destillations-Kolonne (1) des Typs mit innerem Wärmeaustausch, umfassend einen Strippungs-Abschnitt (2) und einen Rektifikations-Abschnitt (3), die in ein Stück integriert sind, worin die Konfiguration der Destillations-Kolonne (1) des Typs mit innerem Wärmeaustausch umfaßt:
- eine Wärmeübertragungs-Einrichtung (5), die auf einer Fläche (4) des Rektifikations-Abschnittes (3) vorgesehen ist, der in Kontakt mit dem Strippungs-Abschnitt (2) steht und in dem Strippungs-Abschnitt (2) untergebracht ist und von der Fläche (4) des Rektifikations-Abschnittes (3) in die Innenseite des Strippungs-Abschnittes (2) vorstehend ist, die in Kontakt mit dem Strippungs-Abschnitt (2) steht; und
- worin der Strippungs-Abschnitt (2) mit einer Wanne (6) oder einer Vielzahl von Wannen (6) versehen ist;
- wobei die Wärmeübertragungs-Einrichtung (5) in der Lage ist, mit Dampf direkt von dem Rektifikations-Abschnitt (3) versorgt zu werden, wodurch eine Wärmeübertragung von der Wärmeübertragungs-Einrichtung (5) auf den Strippungs-Abschnitt (2) ermöglicht wird, während der Dampf zu einer Flüssigkeit kondensiert wird und die Flüssigkeit, die als Ergebnis der Wärmeübertragung kondensiert wurde, zu dem Rektifikations-Abschnitt (3) zurückgeführt wird;
- worin ein einen Kanal ausbildendes Element (53) zum Bilden eines Kanals von Dampf in der Wärmeübertragungs-Einrichtung (5) in Form eines Wärmeübertragungs-Rohrs (51) oder einer Wärmeübertragungs-Platte (52) vorgesehen ist;
- wobei das einen Kanal ausbildende Element (53) eine Platte (54) ist, die in dem Innenabschnitt des Wärmeübertragungs-Rohrs (51) angeordnet ist, wobei ein Ende (54a) der Platte (54) von dem Ende des Wärmeübertragungs-Rohrs (51) weg angeordnet ist und das andere Ende (54b) der Platte (54) in den Rektifikations-Abschnitt (3) vorsteht; oder
- wobei das einen Kanal ausbildende Element (53) vorstehende Abschnitte (56a, 56b) sind, die in dem Dampf-Einlaß und dem Dampf-Auslaß des Wärmeübertragungs-Rohrs (51) vorgesehen sind und so als Dampf-Einleitungs-Abschnitt an dem Einlaß und als Saug-Abschnitt an dem Auslaß dienen; oder
- das einen Kanal bildende Element (53) eine Traufe ist, die halbkreisförmigen Querschnitt (56a, 56b) aufweist, oder eine Platte ist, die einen rechtwinkligen Querschnitt aufweist, oder eine Traufe ist, die einen dreieckigen Querschnitt aufweist, oder eine Traufe ist, die einen rechtwinkligen Querschnitt aufweist, oder eine Traufe ist, die einen Querschnitt eines Fünfecks oder eines Vielecks mit mehr Winkeln aufweist, oder ein Zylinder ist; und
- wenigstens einen Abschnitt (11) zum Öffnen/Schließen in der Destillations-Kolonne (1) des Typs mit innerem Wärmeaustausch, der es erlaubt, daß jeder Inhalt des Strippungs-Abschnitts (2) und des Rektifikations-Abschnitts (3) durch den Abschnitt (11) zum Öffnen/Schließen ersetzt oder gereinigt werden kann, wobei der Abschnitt (11) zum Öffnen/Schließen ein Einstiegsloch ist.

2. Destillations-Kolonne (1) nach Anspruch 1, worin die Wärmeübertragungs-Einrichtung (5) ein Wärmeübertragungs-Rohr (51) oder eine Wärmeübertragungs-Platte (52) ist und das Wärmeübertragungs-Rohr (51) oder die Wärmeübertragungs-Platte (52) versehen ist mit einer Neigung.

3. Destillations-Kolonne (1) nach Anspruch 1 oder 2, worin die Wärmeübertragungs-Einrichtung (5) ein Wärmeübertragungs-Rohr (51) mit einem rechtwinkligen Querschnitt ist und ein Eckpunkt des Abschnitts in einer niedrigeren Position vorgesehen ist als die anderen Eckpunkte des Abschnitts.

4. Destillations-Kolonne (1) nach irgendeinem der Ansprüche 1 bis 3, worin das einen Kanal ausbildende Element (53) aus zwei Platten (54) mit unterschiedlichen Längen besteht, wobei die längere Platte in dem oberen Abschnitt des Stroms des Dampfes vorgesehen ist; oder worin eine Traufe, die einen halbkreisförmigen Querschnitt aufweist, der nach unten zeigt, in einem Dampfkanal angeordnet ist; oder worin ein einen Kanal bildendes Element (53), in dem eine Traufe mit einem rechtwinkligen Querschnitt mit einer Platte kombiniert ist, in dem oberen Abschnitt des Stroms des Dampfes vorgesehen ist.

5. Destillations-Kolonne (1) nach irgendeinem der Ansprüche 1 bis 4, worin der Strippungs-Abschnitt (2) und der Rektifikations-Abschnitt (3) separierbar in ein Stück über einen Verbindungsflansch (9) integriert sind und der Strippungs-Abschnitt (2) und der Rektifikations-Abschnitt (3) separiert sind, so daß ein Inhalt des Strippungs-Abschnitts (2) oder des Rektifikations-Abschnitts (3) ersetzt oder gereinigt werden kann durch Separieren des Strippungs-Abschnitts (2) von dem Rektifikations-Abschnitt (3).

6. Destillations-Kolonne (1) nach irgendeinem der Ansprüche 1 bis 5, worin die Wärmeübertragungs-Einrichtung (5) entfernbar vorgesehen ist.

7. Destillations-Kolonne (1) nach irgendeinem der Ansprüche 1 bis 6, worin die Wanne(n) (6), die in dem Strippungs-Abschnitt (2) vorgesehen ist/sind, mit einem Fallrohr (7) versehen ist / mit Fallrohren (7) versehen sind.

8. Destillations-Kolonne (1) nach irgendeinem der Ansprüche 1 bis 6, worin die Wanne(n) (6), die in dem Strippungs-Abschnitt (2) vorgesehen ist/sind, eine Wanne (6) ohne Fallrohr (7) ist / Wannen (6) ohne Fallrohre (7) sind.

9. Destillations-Kolonne (1) nach irgendeinem der Ansprüche 1 bis 8, worin der Strippungs-Abschnitt (2) eine halb-zylindrische Form oder eine Prisma-Form hat.

10. Destillations-Kolonne (1) nach irgendeinem der Ansprüche 1 bis 8, worin die Querschnitts-Bereiche des Strippungs-Abschnitts (2) und des Rektifikations-Abschnitts (3) in der Destillations-Kolonne (1) variiert werden.

11. Destillations-Kolonne (1) nach irgendeinem der Ansprüche 1 bis 6, worin die Wärmeübertragungs-Einrichtung (5) aus einer Vielzahl von Wärmeübertragungs-Rohren (51) besteht, die in der Lage sind, ein Kondensieren von Flüssigkeit unter Ansammlung darauf und unter Tropfen von einem Raum zwischen den Wärmeübertragungs-Rohren (51) unter Bewirken eines Kontakts zwischen Dampf und Flüssigkeit zu ermöglichen.

## Revendications

1. Colonne de distillation (1) de type à échange de chaleur interne comprenant une section de balayage à la vapeur (2) et une section de rectification (3) qui sont intégrées en une seule pièce, dans laquelle la configuration de la colonne de distillation (1) de type à échange de chaleur interne comprend :
- un moyen de transfert de chaleur (5) prévu sur une face (4) de la section de rectification (3) qui est en contact avec la section de balayage à la vapeur (2) et reçu dans la section de balayage à la vapeur (2) et se projetant de la face (4) de la section de rectification (3) qui est en contact avec la section de balayage à la vapeur (2) jusque dans l'intérieur de la section de balayage à la vapeur (2) et
- la section de balayage à la vapeur (2) étant prévue avec un plateau (6) ou une pluralité de plateaux (6) ;
- le moyen de transfert de chaleur (5) étant apte à être alimenté avec une vapeur provenant directement de la section de rectification (3), permettant ainsi une transmission de chaleur du moyen de transfert de chaleur (5) à la section de balayage à la vapeur (2), tandis que ladite vapeur est condensée en un liquide, et ledit liquide qui a été condensé en résultat du transfert de chaleur est renvoyé jusqu'à la section de rectification (3) ;
- dans laquelle un élément de formation de canal (53) pour former un canal de vapeur est prévu dans le moyen de transfert de chaleur (5) sous la forme d'un tube (51) ou d'une plaque (52) de transfert de chaleur,
- ledit élément de formation de canal (53) étant une plaque (54) disposée dans la partie interne du tube (51) de transfert de chaleur avec une extrémité (54a) de la plaque (54) étant positionnée à l'opposé de l'extrémité du tube (51) de transfert de chaleur et l'autre extrémité (54b) de la plaque (54) se projetant dans la section de rectification (3), ou
- ledit élément de formation de canal (53) étant des parties projetées (56a, 56b) prévues dans l'entrée et la sortie de la vapeur du tube de transfert de chaleur, servant ainsi comme une partie d'introduction de vapeur à l'entrée et comme une partie d'aspiration à la sortie ; ou
- ledit élément de formation de canal (53) étant une gouttière ayant une section semi-circulaire (56a, 56b) ou une plaque ayant une section rectangulaire ou une gouttière ayant une section triangulaire ou une gouttière ayant une section rectangulaire ou une gouttière ayant une section d'un pentagone ou d'un polygone avec plus d'angles ou un cylindre ; et
- au moins une section d'ouverture/fermeture (11) dans la colonne de distillation (1) de type à échange de chaleur interne permettant que chaque contenu dans la section de balayage à la vapeur (2) et la section de rectification (3) puisse être remplacé ou nettoyé à travers la section d'ouverture/fermeture (11), laquelle section d'ouverture/fermeture (11) est un trou d'homme.

2. Colonne de distillation (1) selon la revendication 1, dans laquelle le moyen de transfert de chaleur (5) est un tube (51) ou une plaque (52) de transfert de chaleur et le tube (51) ou la plaque (52) de transfert de chaleur est prévu(e) avec une pente.

3. Colonne de distillation (1) selon la revendication 1 ou 2, dans laquelle le moyen de transfert de chaleur (5) est un tube (51) de transfert de chaleur ayant une section rectangulaire, et un sommet de la section est prévu dans une position plus basse que les autres sommets de la section.

4. Colonne de distillation (1) selon l'une quelconque des revendications 1 à 3, dans laquelle l'élément de formation de canal (53) est constitué de deux plaques (54) ayant des longueurs différentes, la plaque la plus longue étant prévue dans la partie supérieure de l'écoulement de la vapeur ; ou dans laquelle une gouttière ayant une section semi-circulaire faisant face vers le bas est disposée dans un canal de vapeur ; ou dans laquelle un élément de formation de canal (53) dans lequel une gouttière ayant une section rectangulaire est combinée avec une plaque est prévu dans la partie supérieure de l'écoulement de vapeur.

5. Colonne de distillation (1) selon l'une quelconque des revendications 1 à 4, dans laquelle la section de balayage à la vapeur (2) et la section de rectification (3) sont intégrées de façon séparable en une seule pièce par l'intermédiaire d'une bride (9), et la section de balayage à la vapeur (2) et la section de rectification (3) sont séparées de manière à ce qu'un contenu de la section de balayage à la vapeur (2) et de la section de rectification (3) puisse être remplacé ou nettoyé en séparant la section de balayage à la vapeur (2) de la section de rectification (3).

6. Colonne de distillation (1) selon l'une quelconque des revendications 1 à 5, dans laquelle le moyen de transfert de chaleur (5) est prévu amovible.

7. Colonne de distillation (1) selon l'une quelconque des revendications 1 à 6, dans laquelle le/les plateau(x) (6) prévu(s) dans la section de balayage à la vapeur (2) est prévu avec un tuyau de descente (7) / sont prévus avec des tuyaux de descente (7).

8. Colonne de distillation (1) selon l'une quelconque des revendications 1 à 6, dans laquelle le/les plateau(x) (6) prévu(s) dans la section de balayage à la vapeur (2) est un plateau (6) sans tuyau de descente (7) / sont des plateaux (6) sans tuyaux de descente (7).

9. Colonne de distillation (1) selon l'une quelconque des revendications 1 à 8, dans laquelle la section de balayage à la vapeur (2) a une forme semicylindrique ou prismatique.

10. Colonne de distillation (1) selon l'une quelconque des revendications 1 à 8, dans laquelle des zones de section transversale de la section de balayage à la vapeur (2) et de la section de rectification (3) sont fait varier dans la colonne de distillation (1).

11. Colonne de distillation (1) selon l'une quelconque des revendications 1 à 6, dans laquelle le moyen de transfert de chaleur (5) est constitué d'une pluralité de tubes (51) de transfert de chaleur aptes à permettre qu'un liquide de condensation s'accumule sur ceux-ci et chute d'un espace entre les tubes (51) de transfert de chaleur tout en effectuant un contact vapeur-liquide.
